# EUROPEAN PATENT APPLICATION

(11) **EP 4 783 341 A1**
(43) Date of publication of application: **29.07.2026**
(21) Application number: 25867247.6
(22) Date of filing: 19.11.2025
(51) Int. Cl.: H01M 50/367

(54) **BATTERY MODULE**

(30) Priority: 04.12.2024 KR 20240178314
(71) Applicant: LG ENERGY SOLUTION, LTD., Seoul 07335 (KR)
(72) Inventor: KIM, Kwang Mo, Daejeon 34122 (KR); JUNG, Hye Mi, Daejeon 34122 (KR); LEE, Jung Hoon, Daejeon 34122 (KR); LEE, Joo Hyoung, Daejeon 34122 (KR)
(74) Representative: BCKIP Part mbB
(86) International application number: PCT/KR2025/019127
(87) International publication number: WO 2026/121639

(57) **Abstract**

A battery module according to an embodiment of the present disclosure may include:
pouch cells arranged in a first direction, each of the pouch cells including an electrode lead protruding in a second direction perpendicular to the first direction;
a module frame configured to accommodate the pouch cells and open in the second direction, the module frame including a top plate having first vent holes and a first non-perforated portion;
a first vent guide structure disposed between the pouch cells and the top plate, the first vent guide structure including second vent holes and a second non-perforated portion, and configured to guide venting toward the plurality of first vent holes; and
a bus bar frame coupled to the module frame in the second direction and including a second vent guide structure configured to guide venting toward the first vent holes.

Accordingly, the stability of the battery module may be improved.

## Description

### [Technical Field]

The present disclosure relates to a battery module.

This application is based on and claims priority from Korean Patent Application No. 10-2024-0178314, filed on December 4, 2024, with the Korean Intellectual Property Office, the disclosure of which is incorporated herein in its entirety by reference.

### [Background]

A secondary battery may be used repeatedly for an extended period of time through recharging. Secondary batteries are used in various fields such as mobility, portable electronic devices, and energy storage systems (ESSs). In particular, the demand for secondary batteries for mobility is increasing further in order to reduce the dependence on fossil fuels and decrease carbon emissions. However, concerns regarding the safety issues such as thermal runaway events still remain in secondary batteries, and these issues remain an important challenge that needs to be addressed.

In the field of mobility, multiple battery cells are used to ensure performance metrics such as power output and driving range. Typically, these battery cells are arranged into battery modules, and a battery pack consisting of a plurality of battery modules is installed in the vehicle. In this configuration, the battery cells within a single module are positioned adjacent to one another, and the battery modules that configure the battery pack are also positioned adjacent to one another. Consequently, if a thermal runaway event occurs in some battery cells, thermal propagation to adjacent battery cells can easily occur. If this thermal propagation occurs in a chain reaction, it can lead to a major explosion or fire.

### [Summary]

### [Technical Problem]

The technical problem to be solved by the technical spirit of the present disclosure is to provide a battery module capable of guiding the venting direction of high-temperature gas, which may be generated when an accident such as a thermal runaway event occurs in the battery module, toward the vent holes of a top plate.

### [Technical Solution]

Some embodiments of the present disclosure capable of solving the above-mentioned problems are as follows.

A battery module according to an embodiment may include:
a plurality of pouch cells arranged in a first direction, each of the plurality of pouch cells including an electrode lead protruding in a second direction perpendicular to the first direction;
a module frame configured to accommodate the plurality of pouch cells and open in the second direction, the module frame including a top plate having a plurality of first vent holes and a first non-perforated portion;
a first vent guide structure disposed between the pouch cells and the top plate, the first vent guide structure including a plurality of second vent holes and a second non-perforated portion, and configured to guide venting toward the plurality of first vent holes; and
a bus bar frame coupled to the module frame in the second direction and including a second vent guide structure configured to guide venting toward the plurality of first vent holes.

In an embodiment, the second non-perforated portion may include a first surface facing the plurality of pouch cells, and the first surface may be flat.

In an embodiment, the second non-perforated portion may include a first surface facing the plurality of pouch cells, and the first surface may include protruding portions.

In an embodiment, the first vent guide structure may completely overlap the top plate in a third direction perpendicular to the first direction and the second direction.

In an embodiment, each of the plurality of second vent holes may completely overlap a corresponding one of the plurality of first vent holes in a third direction perpendicular to the first and second directions, and the second non-perforated portion may completely overlap the first non-perforated portion in the third direction.

In an embodiment, the second non-perforated portion may include a second surface facing the top plate, and the second surface may be flat.

In an embodiment, the second surface may be in contact with the first non-perforated portion.

In an embodiment, each of the plurality of pouch cells may include a center portion in which an electrode assembly is positioned, a gas pocket portion located at an edge of the center portion, and a sealing portion located at an edge of the gas pocket portion. The gas pocket portion may include a short-side gas pocket portion and a long-side gas pocket portion, and the sealing portion may include a short-side sealing portion and a long-side sealing portion. The second vent guide structure may overlap the short-side sealing portion in the first direction.

In an embodiment, the second vent guide structure may be in contact with the short-side sealing portion.

In an embodiment, the second vent guide structure may not be in contact with the short-side gas pocket portion.

In an embodiment, the second vent guide structure may overlap the short-side gas pocket portion in the first direction.

In an embodiment, the second vent guide structure may not overlap the short-side gas pocket portion in the first direction.

In an embodiment, the long-side gas pocket portion and the long-side sealing portion may be folded toward the center portion to form a folding portion. The second non-perforated portion may include a first surface facing the plurality of pouch cells, and the first surface may be in contact with the folding portion, which overlaps the first surface in a third direction perpendicular to the first and second directions.

In an embodiment, the long-side gas pocket portion and the long-side sealing portion may be folded toward the center portion to form a folding portion. The second non-perforated portion may include a first surface facing the plurality of pouch cells, and the first surface may not be in contact with the folding portion, which overlaps the first surface in a third direction perpendicular to the first and second directions.

In an embodiment, the bus bar frame may include a plurality of slits, each of which allows the electrode lead of a corresponding one of the plurality of pouch cells to pass through, and the second vent guide structure may be positioned closer to the center portion than the plurality of slits are.

### [Advantageous Effects]

Since the battery module according to the embodiments of the present disclosure includes the first and second vent guide structures, when an accident such as a thermal runaway event occurs in the battery module, the venting direction of high-temperature gas may be guided to vent holes of the top plate so as to enhance safety.

The effects of the embodiments of the present disclosure are not limited to those mentioned above, and other effects not mentioned may be clearly derived and understood by those ordinarily skilled in the art from the following description. That is, even unintended effects resulting from the implementation of the embodiments of the present disclosure may also be clearly derived and understood by those ordinarily skilled in the art.

### [Brief Description of the Drawings]

FIG. 1 is a perspective view of a battery module according to a first embodiment.
FIG. 2 is a partially exploded view of the battery module according to the first embodiment.
FIG. 3 is a view illustrating a pouch cell included in the battery module according to the first embodiment.
FIG. 4 is a view illustrating a portion of the internal structure of the battery module according to the first embodiment.
FIG. 5 is a rear perspective view of a bus bar frame included in the battery module according to the first embodiment.
FIG. 6 is a view illustrating a portion of the internal structure of the battery module according to the first embodiment.
FIG. 7 is a view illustrating a portion of the internal structure of a battery module according to a second embodiment.
FIG. 8 is a view illustrating a portion of the internal structure of a battery module according to a third embodiment.

### [Best Mode for Carrying out the Invention]

The terms and words used herein should not be construed as being limited to their ordinary or dictionary meanings, but should be interpreted in accordance with the spirit of the present disclosure based on the principle that an inventor may appropriately define the meanings of terms and words to best describe the invention.

In the present disclosure, the terms such as "include" or "have" are intended to specify the presence of features, numbers, steps, operations, components, elements, or combinations thereof described in the disclosure, and should be understood as not precluding the possibility of the presence or addition of one or more other features, numbers, steps, operations, components, elements, or combinations thereof. In addition, when a part such as a layer, film, region, or plate is described as being "on" another part, this includes not only a case where the part is directly on the other part, but also a case where another part is interposed therebetween. Conversely, when a part such as a layer, film, region, or plate is described as being "under" another part, this includes not only a case where the part is directly under the other part, but also a case where another part is interposed therebetween.

It should be understood that the embodiments and drawings are merely examples of the present disclosure and do not represent the entirety of the technical spirit of the present disclosure, and that various equivalents and modified examples capable of replacing them may exist.

In describing the present disclosure, detailed descriptions of known configurations or functions will be omitted when they are deemed to obscure the gist of the present disclosure.

The drawings are provided to more completely illustrate the present disclosure to those ordinarily skilled in the art. Therefore, the shapes, sizes, and other aspects of the components illustrated in the drawings may be exaggerated, omitted, or schematically illustrated for clarity. The shapes, sizes, proportions, and numbers of respective components in the drawings do not necessarily reflect those of the actual components.

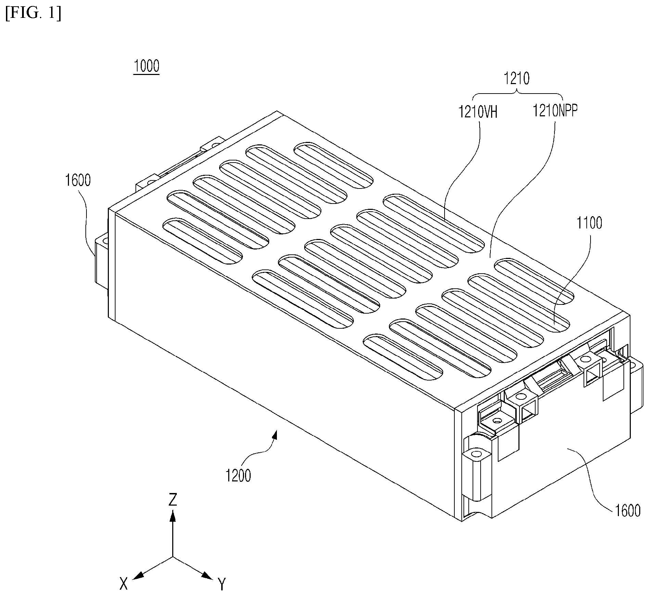

For the convenience of explanation, a three-dimensional Cartesian coordinate system is used in the present disclosure to describe the positions, shapes, and relationships of components. The X-axis, Y-axis, and Z-axis are indicated in FIGS. 1 to 8. Herein, the "X direction" refers to a direction parallel to the X-axis. The "+X direction" refers to the same direction as the arrow of the X-axis indicated in FIGS. 1 to 8. The "-X direction" refers to the direction opposite to the arrow of the X-axis indicated in FIGS. 1 to 8. Herein, the "Y direction" refers to a direction parallel to the Y-axis. The "+Y direction" refers to the same direction as the arrow of the Y-axis indicated in FIGS. 1 to 8. The "-Y direction" refers to the direction opposite to the arrow of the Y-axis indicated in FIGS. 1 to 8. Herein, the "Z direction" refers to a direction parallel to the Z-axis. The "+Z direction" refers to the same direction as the arrow of the Z-axis indicated in FIGS. 1 to 8. The "-Z direction" refers to the direction opposite to the arrow of the Z-axis indicated in FIGS. 1 to 8.

Hereinafter, embodiments of the present disclosure will be described in detail with reference to the accompanying drawings.

### (First Embodiment)

FIG. 1 is a perspective view of a battery module according to a first embodiment of the present disclosure.

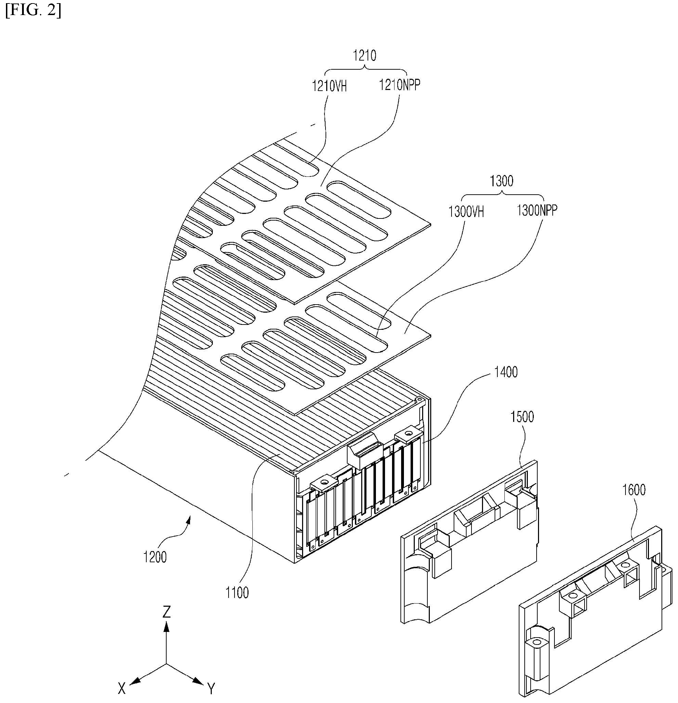

FIG. 2 is a partially exploded view of the battery module according to the first embodiment of the present disclosure.

Referring to FIGS. 1 and 2, a battery module 1000 may include a plurality of pouch cells 1100, a module frame 1200, a first vent guide structure 1300, bus bar frames 1400, insulation covers 1500, and end plates 1600.

Each of the plurality of pouch cells 1100 may include an electrode assembly, electrode tabs, electrode leads 1110, an electrolyte, and a pouch film.

The electrode assembly may include a positive electrode, a negative electrode, and a separator. The positive electrode may include a positive electrode active material layer and a positive electrode current collector. The negative electrode may include a negative electrode active material layer and a negative electrode current collector. The electrode assembly may be of a jelly-roll type or a stacked type. The jelly-roll type may have a structure in which the positive electrode, the negative electrode, and the separator are wound. The stacked type may have a structure in which a first electrode unit including a first positive electrode, a first negative electrode, and a first separator, and a second electrode unit including a second positive electrode, a second negative electrode, and a second separator are stacked with a third separator interposed therebetween. The electrolyte may be of a liquid type or a gel type.

The electrode tabs may include positive electrode tabs and negative electrode tabs. The positive electrode tabs may be coupled to the positive electrode current collector. The positive electrode tabs may be welded to the positive electrode current collector. The negative electrode tabs may be coupled to the negative electrode current collector. The negative electrode tabs may be welded to the negative electrode current collector.

One of the electrode leads 1110 may be a positive electrode lead, and the other may be a negative electrode lead. The positive electrode lead may be coupled to the positive electrode tabs. The positive electrode lead may be welded to the positive electrode tabs. In addition, the negative electrode lead may be coupled to the negative electrode tabs. The negative electrode lead may be welded to the negative electrode tabs. The positive electrode lead and the negative electrode lead may protrude in opposite directions or in the same direction. In the present disclosure, only embodiments in which the positive electrode lead and the negative electrode lead protrude in opposite directions will be described. Those ordinarily skilled in the art to which the present disclosure pertains would readily understand, based on the present disclosure, embodiments in which the positive electrode lead and the negative electrode lead protrude in the same direction.

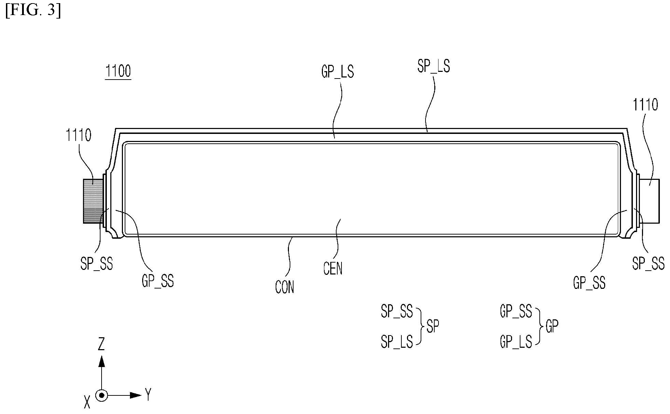

FIG. 3 is a view illustrating a pouch cell included in the battery module according to the first embodiment of the present disclosure.

Referring to FIG. 3, a pouch cell 1100 may have a substantially rectangular shape. The pouch cell 1100 may include a center portion CEN, a gas pocket portion GP, a sealing portion SP, and a connecting portion CON.

An electrode assembly may be positioned in the center portion CEN. The center portion CEN may be a portion that protrudes in the X direction of the pouch cell 1100. The thickness of the center portion CEN in the X direction may be greater than the thickness of the gas pocket portion GP in the X direction. The thickness of the center portion CEN in the X direction may be greater than the thickness of the sealing portion SP in the X direction. The thickness of the center portion CEN in the X direction may be greater than the thickness of the connecting portion CON in the X direction.

The gas pocket portion GP may be located at an edge of the center portion CEN. The gas pocket portion GP may be unsealed. Even when an accident such as a thermal runaway event does not occur in the pouch cell 1100, gas may be generated inside the pouch cell 1100 when the pouch cell 1100 is charged and discharged multiple times or the temperature of the pouch cell 1100 rises above a certain level. The gas pocket portion GP may accommodate the gas generated inside the pouch cell 1100. The gas pocket portion GP, which has accommodated the gas generated inside the pouch cell 1100, may swell.

The gas pocket portion GP may include short-side gas pocket portions GP_SS and a long-side gas pocket portion GP_LS. The short-side gas pocket portions GP_SS may be spaced apart from each other in the Y direction with the center portion CEN interposed therebetween. One of the short-side gas pocket portions GP_SS may be connected to the center portion CEN in the -Y direction, and the other one may be connected to the center portion CEN in the +Y direction. The long-side gas pocket portion GP_LS may be connected to the center portion CEN in the +Z direction. A -Y direction end of the long-side gas pocket portion GP_LS may be connected to one of the short-side gas pocket portions GP_SS, and a +Y direction end of the long-side gas pocket portion GP_LS may be connected to the other short-side gas pocket portion GP_SS.

The sealing portion SP may be located at an edge of the gas pocket portion GP. The sealing portion SP may be a portion where the pouch film of the pouch cell 1100 is bonded by, for example, heat fusion. As described above, even when gas is generated inside the pouch cell 1100 and the internal pressure of the pouch cell 1100 increases, the sealing state of the pouch cell 1100 may be maintained by the sealing portion SP. However, when an accident such as a thermal runaway event occurs in the pouch cell 1100 and a large amount of high-temperature gas is excessively generated inside the pouch cell 1100, resulting in excessive internal pressure, the high-temperature gas may release the sealing of the sealing portion SP and may be vented to the outside of the pouch cell 1100. In this case, the first vent guide structure 1300 and the second vent guide structure 1410 may guide the high-temperature gas to be vented in a predetermined direction.

The sealing portion SP may include short-side sealing portions SP_SS and a long-side sealing portion SP_LS. The short-side sealing portions SP_SS may be spaced apart from each other in the Y direction with the center portion CEN and the short-side gas pocket portions GP_SS interposed therebetween. One of the short-side sealing portions SP_SS may be connected to one of the short-side gas pocket portions GP_SS in the -Y direction, and the other one may be connected to the other short-side gas pocket portion GP_SS in the +Y direction. The long-side sealing portion SP_LS may be connected to the long-side gas pocket portion GP_LS in the +Z direction. A -Y direction end of the long-side sealing portion SP_LS may be connected to one of the short-side sealing portions SP_SS, and a +Y direction end of the long-side sealing portion SP_LS may be connected to the other short-side sealing portion SP_SS.

The connecting portion CON may be located at an edge of the center portion CEN. The connecting portion CON may be unsealed. The connecting portion CON may be connected to the center portion CEN in the -Z direction. The connecting portion CON may be formed in a process in which an electrode assembly and electrode tabs are placed on a single pouch film, and the pouch film is folded or bent so as to wrap the electrode assembly and the electrode tabs. When two pouch films are used (e.g., placing the electrode assembly and electrode tabs on one pouch film, covering them with another pouch film, and bonding the two pouch films by heat fusion), a gas pocket portion GP and a sealing portion SP may be located at the position of the connecting portion CON.

Referring back to FIGS. 1 and 2, the plurality of pouch cells 1100 may be arranged in the X direction. The plurality of pouch cells 1100 may be configured as banks. For example, the banks may include a first bank, intermediate banks, and a last bank. Each bank may include pouch cells 1100 connected in parallel to each other. The banks may be connected in series. When the pouch cells 1100 include n banks, and each of the n banks includes m pouch cells, the connection method of the pouch cells 1100 may be referred to as m parallel-n series. The connection method of the plurality of pouch cells 1100 included in the battery module 1000 may be determined according to the required current and voltage of the battery module 1000.

The module frame 1200 may accommodate the plurality of pouch cells 1100. The material of the module frame 1200 may include one or more of aluminum, an aluminum alloy, steel, or stainless steel. The module frame 1200 may be open in the Y direction. The module frame 1200 may include a top plate 1210. The top plate 1210 may be located above the plurality of pouch cells 1100. The top plate 1210 may be spaced apart from the plurality of pouch cells 1100 in the Z direction. The module frame 1200 may be formed by coupling a U-frame and the top plate 1210 by, for example, welding. The module frame 1200 may be an integrated mono frame, and the top plate 1210 may be a portion of the mono frame.

The top plate 1210 may include a plurality of first vent holes 1210VH and a first non-perforated portion 1200NPP. High-temperature gas generated when an accident such as a thermal runaway event occurs in the battery module 1000 may be discharged to the outside of the battery module 1000 through the plurality of first vent holes 1210VH. The first non-perforated portion 1200NPP may be a portion of the top plate 1210 excluding the plurality of first vent holes 1210VH.

The first vent guide structure 1300 may be positioned between the plurality of pouch cells 1100 and the top plate 1210. The first vent guide structure 1300 may be configured to guide high-temperature gas generated when an accident such as a thermal runaway event occurs in the battery module 1000 to be vented through the plurality of first vent holes 1210VH. The first vent guide structure 1300 may be configured to suppress the high-temperature gas generated when such an accident occurs from being vented toward the first non-perforated portion 1200NPP.

The material of the first vent guide structure 1300 may be a flame-retardant material. For example, the material of the first vent guide structure 1300 may include one or more of ceramic, silicone, and mica. The first vent guide structure 1300 may be in the form of a foam, pad, or plate.

In an embodiment, the first vent guide structure 1300 may include a plurality of second vent holes 1300VH and a second non-perforated portion 1300NPP. High-temperature gas generated when an accident such as a thermal runaway event occurs in the battery module 1000 may be discharged to the outside of the battery module 1000 through the plurality of second vent holes 1300VH. The second non-perforated portion 1300NPP may be a portion of the first vent guide structure 1300 excluding the plurality of second vent holes 1300VH.

In an embodiment, each of the plurality of second vent holes 1300VH may be completely aligned in the Z direction with a corresponding one of the plurality of first vent holes 1210VH. Each of the plurality of second vent holes 1300VH may be connected to a corresponding one of the plurality of first vent holes 1210VH. Each of the plurality of second vent holes 1300VH may have substantially the same size and shape as a corresponding one of the plurality of first vent holes 1210VH. The second non-perforated portion 1300NPP may completely overlap the first non-perforated portion 1210NPP in the Z direction. In an embodiment, the first vent guide structure 1300 may completely overlap the top plate 1210 in the Z direction.

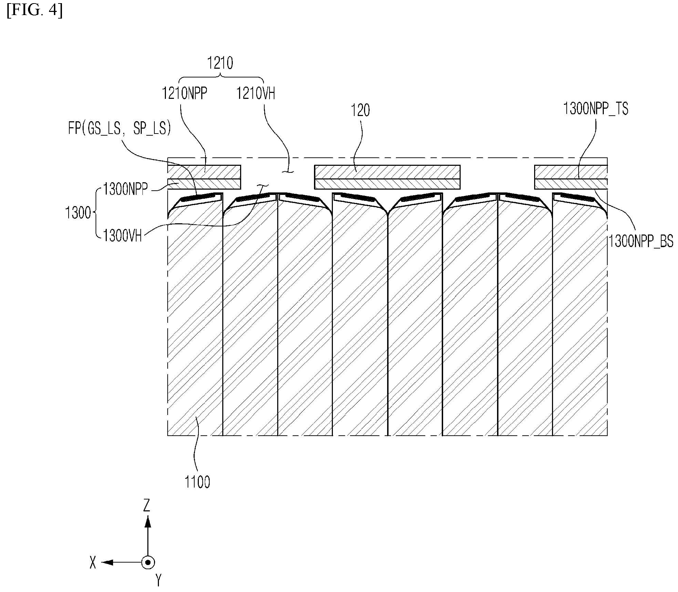

FIG. 4 is a view illustrating a portion of the internal structure of the battery module according to the first embodiment of the present disclosure.

Referring to FIG. 4, the second non-perforated portion 1300NPP may include a first surface 1300NPP_BS facing the pouch cells 1100 and a second surface 1300NPP_TS facing the top plate 1210. The first surface 1300NPP_BS may be referred to as the bottom surface of the second non-perforated portion 1300NPP, and the second surface 1300NPP_TS may be referred to as the top surface of the second non-perforated portion 1300NPP. In an embodiment, the first surface 1300NPP_BS and the second surface 1300NPP_TS may be flat. The second surface 1300NPP_TS may be in contact with the first non-perforated portion 1210NPP. The second surface 1300NPP_TS may be in contact with the bottom surface of the first non-perforated portion 1210NPP. As a non-limiting example, the second non-perforated portion 1300NPP and the first non-perforated portion 1210NPP may be bonded to each other by, for example, an adhesive or double-sided tape.

The long-side gas pocket portion GP_LS and the long-side sealing portion SP_LS of the pouch cell 1100 accommodated in the module frame 1200 may be folded toward the center portion CEN to form a folding portion FP. Accordingly, the internal space of the module frame 1200 may be utilized efficiently. As a non-limiting example, the folding portion FP may be fixed to the center portion CEN using, for example, adhesive tape.

In an embodiment, the first surface 1300NPP_BS may be in contact with the folding portion FP, which overlaps the first surface in the Z direction. In an embodiment, the first surface 1300NPP_BS may be spaced apart in the Z direction from the folding portion FP, which overlaps the first surface in the Z direction. However, when an accident such as a thermal runaway event occurs in the battery module 1000 and the folding portion FP overlapping the first surface 1300NPP_BS in the Z direction swells due to high-temperature gas generated inside the pouch cell 1100, the first surface 1300NPP_BS may come into contact with the overlapping folding portion FP in the Z direction. The first surface 1300NPP_BS may reduce the stress applied to the overlapping folding portion FP by internal pressure of the pouch cell 1100. Even when an accident such as a thermal runaway event occurs and an excessive amount of high-temperature gas is generated inside the pouch cell 1100, the flow of the high-temperature gas may be guided by the first surface 1300NPP_BS toward a portion other than the folding portion FP overlapping the first surface 1300NPP_BS in the Z direction. The high-temperature gas may release the sealing of the folding portion FP overlapping the plurality of first vent holes 1210VH and the plurality of second vent holes 1300VH in the Z direction, and may be vented through the plurality of first vent holes 1210VH and second vent holes 1300VH.

The bus bar frames 1400 may be spaced apart from each other in the Y direction with the center portions CEN of the pouch cells 1100 interposed therebetween. One of the bus bar frames 1400 may be coupled to the module frame 1200 from the +Y direction, and the other one may be coupled to the module frame 1200 from the -Y direction. One of the bus bar frames 1400 may support a positive bus bar, intermediate bus bars, and a negative bus bar, and the other one may support the intermediate bus bars. Electrode leads 1110 of the first bank may be welded to the positive bus bar. Electrode leads 1110 of corresponding ones of the intermediate banks may be welded to respective ones of the intermediate bus bars. Each of the intermediate bus bars may have a substantially O-shaped structure. Electrode leads 1110 of the last bank may be welded to the negative bus bar. Electrical connection between the battery module 1000 and an external system may be made via the positive and negative bus bars. The material of the bus bar frames 1400 may be a material having high electrical insulation and flame resistance.

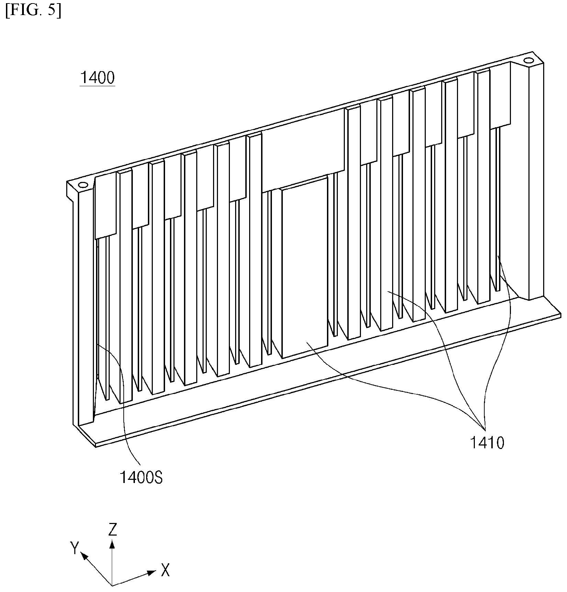

FIG. 5 is a rear perspective view of a bus bar frame included in the battery module according to the first embodiment of the present disclosure.

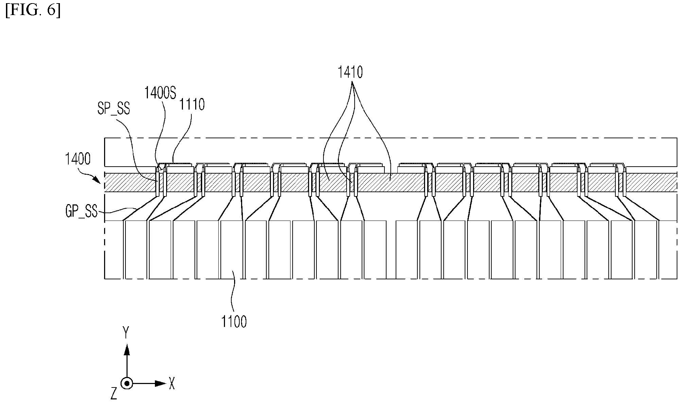

FIG. 6 is a view illustrating a portion of the internal structure of the battery module according to the first embodiment of the present disclosure.

Referring to FIGS. 5 and 6, the bus bar frame 1400 may include a plurality of slits 1400S and a second vent guide structure 1410. In an embodiment, the second vent guide structure 1410 may be closer to the center portion CEN than the slits 1400S are.

Each of the plurality of slits 1400S may extend in the Z direction. The plurality of slits 1400S may be spaced apart from each other in the X direction. An electrode lead 1110 of a corresponding one of the plurality of pouch cells 1100 may pass through each of the plurality of slits 1400S.

The second vent guide structure 1410 may guide the plurality of electrode leads 1110 to corresponding ones of the plurality of slits 1400S. The second vent guide structure 1410 may be configured to guide high-temperature gas generated when an accident such as a thermal runaway event occurs in the battery module 1000 to be vented through the first vent holes 1210VH. The second vent guide structure 1410 may be configured to prevent or suppress high-temperature gas generated when an accident such as a thermal runaway event occurs in the battery module 1000 from being vented in the Y direction. The second vent guide structure 1410 may be configured to prevent or suppress high-temperature gas generated when an accident such as a thermal runaway event occurs in the battery module 1000 from being vented in the direction in which the bus bar frame 1400 is located.

In an embodiment, the second vent guide structure 1410 may overlap the short-side sealing portion SP_SS in the X direction. In an embodiment, the second vent guide structure 1410 may be in contact with the short-side sealing portion SP_SS. The second vent guide structure 1410 may reduce stress applied to the short-side sealing portion SP_SS by internal pressure of the pouch cell 1110. Even when an accident such as a thermal runaway event occurs and an excessive amount of high-temperature gas is generated inside the pouch cell 1100, the flow of the high-temperature gas may be guided by the second vent guide structure 1410 toward a portion other than the short-side sealing portion SP_SS. The high-temperature gas may release the sealing of the folding portion FP that overlap the plurality of first vent holes 1210VH and the second vent holes 1300VH in the Z direction, and may be vented through the plurality of first vent holes 1210VH and second vent holes 1300VH.

In an embodiment, the second vent guide structure 1410 may not be in contact with the short-side gas pocket portion GP_SS. In an embodiment, the second vent guide structure 1410 may not overlap the short-side gas pocket portion GP_SS in the X direction. The second vent guide structure 1410 may not press the short-side gas pocket portion GP_SS. Accordingly, the short-side gas pocket portion GP_SS may accommodate gas generated inside the pouch cell 1110 and thereby perform its original function as a gas pocket portion.

The insulation covers 1500 may be spaced apart from each other in the Y direction with the plurality of pouch cells 1100 and the bus bar frames 1400 interposed therebetween. One of the insulation covers 1500 may cover one of the bus bar frames 1400 in the +Y direction, and the other one may cover the other bus bar frame 1400 in the -Y direction. One of the insulation covers 1500 may include an inner positive bus bar hole configured to expose a portion of the positive bus bar to the outside of the battery module 1000 and an inner negative bus bar hole configured to expose a portion of the negative bus bar to the outside of the battery module 1000. The material of the insulation covers 1500 may be a material having high electrical insulation and flame resistance.

The end plates 1600 may be spaced apart from each other in the Y direction with the pouch cells 1100, the bus bar frames 1400, and the insulation covers 1500 interposed therebetween. One of the end plates 1600 may cover one of the insulation covers 1500 in the +Y direction, and the other one may cover the other insulation cover 1500 from the -Y direction. One of the end plates 1600 may include an outer positive bus bar hole configured to expose a portion of the positive bus bar to the outside of the battery module 1000, and an outer negative bus bar hole configured to expose a portion of the negative bus bar to the outside of the battery module 1000. The material of the end plates 1600 may be a material having high rigidity and heat resistance.

### (Second Embodiment)

The second embodiment is substantially the same as the first embodiment except for the shape of a first vent guide structure 1300'. Therefore, descriptions of components that are substantially the same as those in the first embodiment will be omitted.

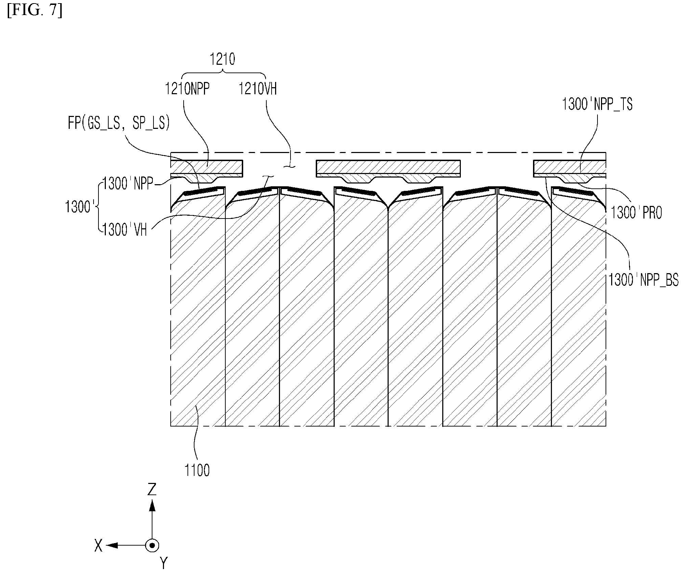

FIG. 7 is a view illustrating a portion of the internal structure of the battery module according to the second embodiment of the present disclosure.

Referring to FIG. 7, a first surface 1300'NPP_BS may include protrusions 1300'PRO.

In an embodiment, the protrusions 1300'PRO may be in contact with a folding portion FP, which overlaps the protrusions in the Z direction. In an embodiment, the protrusions 1300'PRO may be spaced apart in the Z direction from the folding portion FP, which overlaps the protrusions in the Z direction. However, when an accident such as a thermal runaway event occurs in the battery module 1000 and the folding portion FP, which overlaps the protrusions 1300'PRO in the Z direction, bulges due to high-temperature gas generated inside the pouch cell 1100, the protrusions 1300'PRO come into contact with the folding portion FP in the Z direction. The protrusions 1300'PRO may reduce the stress applied to the folding portion FP, which overlaps the protrusions 1300'PRO, by the internal pressure of the pouch cell 1100. Even when an accident such as a thermal runaway event occurs and an excessive amount of high-temperature gas is generated inside the pouch cell 1100, the flow of the high-temperature gas may be guided, by the protrusions 1300'PRO, toward a portion other than the folding portion FP, which overlaps the protrusions 1300'PRO in the Z direction. The high-temperature gas may release the sealing of the folding portion FP, which overlaps the plurality of first vent holes 1210VH and the second vent holes 1300'VH in the Z direction, and may be vented through the plurality of first vent holes 1210VH and second vent holes 1300'VH.

### (Third Embodiment)

The third embodiment is substantially the same as the first embodiment except for the shape of a second vent guide structure 1410'. Therefore, descriptions of components that are substantially the same as those in the first embodiment will be omitted.

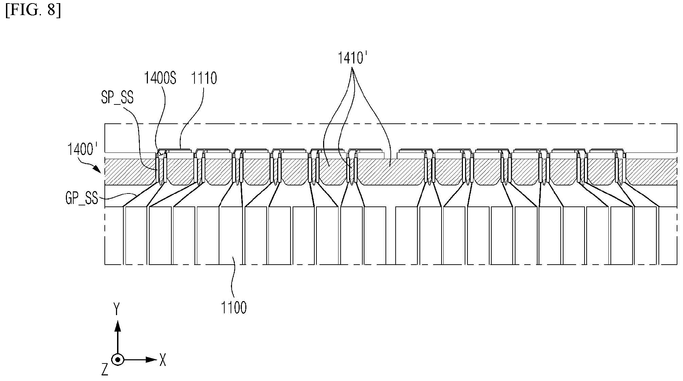

FIG. 8 is a view illustrating a portion of the internal structure of a battery module according to the third embodiment of the present disclosure.

Referring to FIG. 8, a bus bar frame 1400' may include a second vent guide structure 1410'. The second vent guide structure 1410' may overlap the short-side gas pocket portion GP_SS in the X direction. However, similar to the second vent guide structure 1410, the second vent guide structure 1410' may not be in contact with the short-side gas pocket portion GP_SS. Accordingly, as in the second vent guide structure 1410, the second vent guide structure 1410' may also not press the short-side gas pocket portion GP_SS.

The above description is merely intended to illustrate the present disclosure by way of example. The scope of the present disclosure should be interpreted based on the claims, and all technical ideas within the equivalent or substantially equivalent scope thereof should be construed as being included within the scope of the present disclosure.

### [Description of Reference Numerals]

1000: BATTERY MODULE
1100: POUCH CELL
1110: ELECTRODE LEAD
CEN: CENTER PORTION
GP: GAS POCKET PORTION
GP_SS: SHORT SIDE GAS POCKET PORTION
GP_LS: LONG SIDE GAS POCKET PORTION
SP: SEALING PORITON
SP_SS: SHORT SIDE SEALING PORTION
SP_LS: LONG SIDE SEALING PORTION
CON: CONNECTING PORTION
FP: FOLDING PORTION
1200: MODULE FRAME
1210: TOP PLATE
1210VH: FIRST VENT HOLE
1210NPP: FIRST NON-PERFORATED PORTION
1300: FIRST VENT GUIDE STRUCTURE
1300VH: SECOND VENT HOLE
1300NPP: SECOND NON-PERFORATED PORTION
1300NPP_BS: FIRST SURFACE
1300NPP_TS: SECOND SURFACE
1400: BUS BAR FRAME
1410: SECOND VENT GUIDE STRUCTURE
1500: INSULATION COVER
1600: END PLATE

## Claims

1. A battery module comprising:
a plurality of pouch cells arranged in a first direction, each of the plurality of pouch cells including an electrode lead protruding in a second direction perpendicular to the first direction;
a module frame configured to accommodate the plurality of pouch cells and open in the second direction, the module frame including a top plate having a plurality of first vent holes and a first non-perforated portion;
a first vent guide structure disposed between the pouch cells and the top plate, the first vent guide structure including a plurality of second vent holes and a second non-perforated portion, and configured to guide venting toward the plurality of first vent holes; and
a bus bar frame coupled to the module frame in the second direction and including a second vent guide structure configured to guide venting toward the plurality of first vent holes.

2. The battery module of claim 1, wherein
the second non-perforated portion includes a first surface facing the plurality of pouch cells, and
the first surface is flat.

3. The battery module of claim 1, wherein
the second non-perforated portion includes a first surface facing the plurality of pouch cells, and
the first surface includes protruding portions.

4. The battery module of claim 1, wherein
the first vent guide structure completely overlaps the top plate in a third direction perpendicular to the first direction and the second direction.

5. The battery module of claim 1, wherein
each of the plurality of second vent holes completely overlaps a corresponding one of the plurality of first vent holes in a third direction perpendicular to the first and second directions, and
the second non-perforated portion completely overlaps the first non-perforated portion in the third direction.

6. The battery module of claim 1, wherein
the second non-perforated portion includes a second surface facing the top plate, and
the second surface is flat.

7. The battery module of claim 6, wherein
the second surface is in contact with the first non-perforated portion.

8. The battery module of claim 1, wherein
each of the plurality of pouch cells includes a center portion in which an electrode assembly is positioned, a gas pocket portion located at an edge of the center portion, and a sealing portion located at an edge of the gas pocket portion,
the gas pocket portion includes a short-side gas pocket portion and a long-side gas pocket portion,
the sealing portion includes a short-side sealing portion and a long-side sealing portion, and
the second vent guide structure overlaps the short-side sealing portion in the first direction.

9. The battery module according to claim 8, wherein
the second vent guide structure is in contact with the short-side sealing portion.

10. The battery module according to claim 8, wherein
the second vent guide structure is not in contact with the short-side gas pocket portion.

11. The battery module according to claim 8, wherein
the second vent guide structure overlaps the short-side gas pocket portion in the first direction.

12. The battery module according to claim 8, wherein
the second vent guide structure does not overlap the short-side gas pocket portion in the first direction.

13. The battery module according to claim 8, wherein
the long-side gas pocket portion and the long-side sealing portion are folded toward the center portion to form a folding portion,
the second non-perforated portion includes a first surface facing the plurality of pouch cells, and
the first surface is in contact with the folding portion, which overlaps the first surface in a third direction perpendicular to the first and second directions.

14. The battery module according to claim 8, wherein
the long-side gas pocket portion and the long-side sealing portion are folded toward the center portion to form a folding portion,
the second non-perforated portion includes a first surface facing the plurality of pouch cells, and
the first surface is not in contact with the folding portion, which overlaps the first surface in a third direction perpendicular to the first and second directions.

15. The battery module according to claim 8, wherein
the bus bar frame includes a plurality of slits,
each of the plurality of slits allows the electrode lead of a corresponding one of the plurality of pouch cells to pass through, and
the second vent guide structure is positioned closer to the center portion than the plurality of slits.
